# EUROPÄISCHE PATENTSCHRIFT

(11) **EP 1 034 390 B1**
(45) Veröffentlichungstag und Bekanntmachung des Hinweises auf die Patenterteilung: **06.08.2003**
(21) Anmeldenummer: 98962396.2
(22) Anmeldetag: 27.11.1998
(51) Int. Cl.: F16J 1/18

(54) **KOLBENEINHEIT**
PISTON UNIT
ENSEMBLE PISTON

(30) Priorität: 28.11.1997 DE 19752764
(43) Veröffentlichungstag der Anmeldung: 13.09.2000
(73) Patentinhaber: Motorenfabrik Hatz GmbH & Co. KG, 94099 Ruhstorf (DE)
(72) Erfinder: EDER, Erich, D-94152 Vornbach/Inn (DE); KAMPICHLER, Günter, D-94099 Ruhstorf/Rott (DE)
(74) Vertreter: Grättinger & Partner (GbR)
(86) Internationale Anmeldenummer: EP9807625
(87) Internationale Veröffentlichungsnummer: WO99028660

(56) Entgegenhaltungen:
- WO-A-94/28297
- DE-A- 2 147 551
- DE-C- 3 822 457
- GB-A- 333 753
- GB-A- 2 163 520
- US-A- 1 789 840
- US-A- 1 810 423

## Beschreibung

Die Erfindung betrifft eine Vorrichtung gemäß dem Oberbegriff von Patentanspruch 1.

Üblicherweise ist bei Kolben von Verbrennungsmotoren im Kolben auf der Unterseite des Kolbenbodens ein Kolbenbolzen in entsprechenden seitlichen Kolbenbolzenbohrungen schwenkbar gelagert.

Ein derart gelagerter Kolbenbolzen unterliegt ungemindert den Biegebeanspruchungen der durch das Pleuel übertragenen durch die Verbrennung im Brennraum erzeugten Kräfte. Dementsprechend erfordert die Fertigung der Kolbenbolzenlagerung die Einhaltung enger Toleranzen sowohl bei der Herstellung des Kolbenbolzens als auch auf seiten der Kolbenbolzenbohrungen. Bei der Montage bzw. dem nachträglichen Ausbau des Kolbens im Falle einer Wartung bzw. Reparatur kann der Kolben nur zusammen mit dem Pleuel in den Zylinder eingesetzt bzw. aus diesem ausgefahren werden, was eine Demontage der Ölwanne zur Voraussetzung hat. Erst dann kann die untere Pleuellagerschale entfernt werden. Die Montage der Kolbeneinheit erfordert also eine weitgehende Zerlegung des Motors, wobei eine Demontage des Zylinderkopfs stets unabdingbar ist.

Bei einem bekannten Pendelschaftkolben (AT 340205) ist der Kolbenbolzen mit seitlichen Abflachungen versehen, die als Anlageflächen zu dessen Verschraubung mit der Unterseite des Kolbenbodens dienen. Seitlich überstehende Lagerende des Kolbenbolzens sind in entsprechenden Kolbenbolzenbohrungen des Schaftteils des Hubkolbens gelagert. Der Kolbenbolzen ist somit in der üblichen Weise auf Biegung beansprucht. Da der Kolbenbolzen im Bereich seines mittleren Teils einen größeren Durchmesser aufweist als im Bereich seiner seitlichen Lagerstellen, sind die Kolbenbolzenbohrungen langlochartig erweitert ausgebildet, um die Montage des Kolbenbolzens zu ermöglichen.

Bei einer anderen bekannten Kolbenausführung (US 5307732) ist ein innerhalb des Kolbenhemds befestigtes Verbindungsglied in der Art eines verkürzten Kolbenbolzens ausgebildet, welcher beidseitig in Lagerschalen auf der Unterseite des Kolbenbodens aufgenommen und dort verschraubt ist. Derartige schalenförmige Anlageflächen zwischen Verbindungsglied und Kolben erfordern einen verhältnismäßig hohen Herstellungsaufwand. Letzteres trifft gleichermaßen auf eine andere bekannte Kolbenbauweise zu (DE 3235220), bei welcher ein weiterer Kolbenteil innerhalb des Kolbenhemds befestigt ist, in welchem sich das Pleuellager befindet. Zur Montage des Kolbenbolzens, auf welchem das Pleuelauge gelagert ist, ist es erforderlich, den inneren Kolbenteil nochmals zu teilen. Zur Befestigung dieser Kolbenteile dient eine durch den Kolbenboden geführte Verschraubung.

Gemäß WO-A-94/28297 ist schließlich eine Kolben-Pleuel-Einheit bekannt, welche ein kolbenfestes Verbindungsglied mit einer Lagerstelle für ein Pleuelauge aufweist, wobei das Verbindungsglied auf der dem Brennraum abgewandten Seite des Kolbens mit diesem verschraubt ist und wobei die Lagerstelle zur Pleuelstange hin deutlich breiter ist als auf ihrer dem Kolben zugewandten Seite. Der Kolben ist zweigeteilt, derart, daß ein Kolbenhemd mit einem Kolbenboden durch die Verschraubung zwischen letzterem und dem Verbindungsglied befestigt werden kann. Das Verbindungsglied ist im wesentlichen zylindrisch ausgebildet und stützt sich mit seiner oberen Umfangsfläche gegen eine entsprechende Hohlform in der Unterseite des Kolbenbodens ab. Dieser kann zwar zum Austausch der Kolbenringe nach oben ausgebaut werden; dies gilt jedoch nicht für das Kolbenhemd, welches über das Verbindungsglied mit dem Pleuel verbunden ist, indem es mit seinen gegenüberliegenden Enden in Kolbenbolzenbohrungen des Kolbenhemds eingreift. Infolge dieser seitlichen Lagerung des Verbindungsglieds wird dieses nicht nur auf Zug sondern auch auf Biegung durch die vom Kolben ausgeübten Kräfte beansprucht.

Auch bei der gattungsgemäßen Ausgestaltung einer Kolbeneinheit gemäß GB-A-2163520 ist das Verbindungsglied derart lang ausgebildet, daß ein Ausbau des Pleuels nach oben nicht möglich ist, wenn die Verschraubung zwischen dem Kolbenboden und dem Verbindungsglied gelöst wird. In den Verschraubungsbereichen sind ringförmig umlaufende ebene Anlageflächen zwischen der Unterseite des Kolbenbodens und dem Verbindungsglied vorgesehen, so daß im Verschraubungsbereich das Kolbenhemd und eine umlaufende Dichtung durch Klemmen befestigbar sind. Da die Schrauben in den seitlichen Enden des Verbindungsglieds, also deutlich außerhalb des Pleuelauges sitzen, wird das Verbindungsglied auf Biegung beansprucht.

Demgegenüber liegt der vorliegenden Erfindung die Aufgabe zugrunde Montage/Demontage von Kolben und Pleuel zu vereinfachen und ein Verbindungsglied zwischen Pleuelstange und Kolben zu schaffen, welches geeignet ist, ein optimales Abtragen von Biegekräften auf das Verbindungsglied aufgrund der durch den Kolben ausgeübte Kräfte zu ermöglichen.

Diese Aufgabe wird erfindungsgemäß an einer Vorrichtung der eingangs genannten Art in der im Kennzeichen von Patentanspruch 1 beschriebenen Art und Weise gelöst.

Damit wird ein Hubkolbenmotor mit Teilebenen zwischen Zylinderkopfdeckel und Zylinder sowie Zylinder und Kurbelgehäuse geschaffen, bei welchem der übliche Kolbenbolzen durch ein Verbindungsglied ersetzt ist, welches mit dem Kolben auf seiner dem Brennraum abgewandten Seite verschraubt ist und eine Lagerstelle für ein Pleuelauge als kolbenseitiges Schwenklager des Pleuels aufweist, wobei das Verbindungsglied mindestens im Bereich der Verschraubung ebene Anlageflächen aufweist, welche mit Gegenflächen auf der Innenseite des Kolbens eine gemeinsame Trennebene bilden, und wobei das Verbindungsglied mittels einer oder mehrerer durch Bohrungen im Kolbenboden hindurchgeführten Verbindungsschrauben befestigt ist. Erfindungsgemäß ist dabei die Lagerstelle zur Pleuelstange hin deutlich breiter als auf ihrer dem Kolben zugewandten Seite, der Kolben einteilig ausgebildet und das Verbindungsglied derart innerhalb des Kolbenhemds befestigt, daß Kolben und Verbindungsglied nach dem Lösen der Verbindungsschrauben durch die zylinderkopfseitige Zylinderöffnung ausgebaut werden können.

In einer einteiligen Ausführungsform der kolbenseitigen Lagerstelle weist das Verbindungsglied zwei seitliche jeweils an die Trennebene angrenzende Anlageflächen auf, zwischen denen sich die kolbenseitige Lagerstelle befindet. In einer geteilten Ausführung der kolbenseitigen Lagerstelle besitzt das Verbindungsglied eine mittige, an die Trennebene angrenzende Anlagefläche, die sich zwischen zwei seitlichen kolbenseitigen Lagerstellen befindet. In beiden Fällen ist die kolbenseitige Lagerstelle deutlich schmäler verglichen mit der zur Pleuelstange hinweisen Lagerstelle, d.h. es entsteht ein sog. Stufenpleuel mit einem schmalen kolbenseitigen Pleuelauge und einem demgegenüber deutlich breiteren Pleuelauge auf der Seite der Pleuelstange. Auf diese Weise wird ein optimales Abtragen von Biegekräften auf das Verbindungsglied aufgrund der durch den Kolben ausgeübten Kräfte erzielt. Bei mittig angeordneter Trennebene und seitlichen Lagerstellen entfällt praktisch jede Biegebelastung, weil das Verbindungsglied nicht über die Aufnahme im Pleuel übersteht, so daß die Zündkräfte direkt über das Verbindungsglied in die Pleuelstange eingeleitet werden. Damit wird vom Kolbenhemd jede Belastung ferngehalten, d.h. eine Verformung des Kolbenhemds ist nicht zu befürchten. Der Kolben kann daher insgesamt besonders leicht und dünnwandig ausgeführt werden, d.h. das Kolbenhemd kann entsprechend reduziert ausgebildet. werden. Insgesamt ist eine Reduzierung der oszillierenden Kolbenmasse bezogen auf die Kolben-Pleuel-Einheit bis zu 50% gegenüber konventionellen Ausführungsformen erreichbar.

Entfernt man den Zylinderkopf, so sind von dort aus die Verbindungsschrauben, die durch Bohrungen im Kolbenboden hindurchgeführt sind, frei zugänglich. Bevorzugt sind dabei die Schraubenköpfe der Verbindungsschrauben im Boden vertieft angeordnet, z.B. innerhalb einer Bodenmulde des Kolbenbodens. Nach dem Lösen der Schrauben läßt sich der Kolben nach oben abheben, wonach das Verbindungsglied entfernt werden kann, so daß das von der Kurbelwelle entfernte Ende (Pleuelauge) der Pleuelstange frei zugänglich ist. Es kann dann sehr leicht und wiederum durch die zylinderkopfseitige Zylinderöffnung die Lagerschale des Pleuels von der Kurbelwelle gelöst werden, wobei mit dem Entfernen der Schrauben der untere Lagerdeckel der Pleuellagerschale mittels eines Werkzeugs zu halten ist, bevor er mit diesem Werkzeug entfernt wird.

Umgekehrt geht man selbstverständlich bei der Montage des Pleuels bzw. des Kolbens vor, ohne daß der Motor zerlegt werden muß, d.h. es ist weder die Ölwanne abzubauen, noch ist ein Ausbau der Kurbelwelle erforderlich.

Unabhängig von den vorstehend erläuterten Möglichkeiten einer Montagevereinfachung ermöglicht die Verwendung des erfindungsgemäßen Verbindungsglieds eine Reduzierung des Herstellungsaufwands, weil damit nicht nur die bei einem Kolbenbolzen üblicher Bauart aufwendige Bearbeitung der beiden seitlichen Bolzenaugen entfällt; vielmehr vereinfacht sich zudem die Herstellung des Kolbens insofern, als es genügt, diesen auf der Rückseite des Kolbenbodens zentrisch auszudrehen, um eine Planfläche zur Befestigung des erfindungsgemäßen Verbindungsglieds zu schaffen. Für die Verbindungsschrauben durch den Kolbenboden sind entsprechende Bohrlöcher zu fertigen, wobei sich die zugehörigen Gewindebohrungen im Verbindungsglied befinden.

Das erfindungsgemäße Verbindungsglied weist mindestens im Bereich der Verschraubung ebene Anlageflächen auf, welche mit Gegenflächen auf der Innenseite des Kolbens eine gemeinsame Trennebene bilden. Dabei ist es zweckmäßig, das zur Querkraftaufnahme im Bereich der Trennebene diese überbrückende Zylinderstifte oder die Verbindungsschrauben umfassende Paßhülsen vorgesehen sind; ferner besteht die Möglichkeit, die Verbindungsschrauben als Paßschrauben auszubilden, wobei deren Passungsabschnitt die Trennebene überbrückt.

Nach einer besonders vorteilhaften Ausführungsform besitzt die Vorrichtung nur eine einzige Verbindungsschraube, die sich bevorzugt im Zentrum der mittig angeordneten Anlagefläche befindet und die im Bereich der Trennebene einen Passungsansatz aufweist, welcher der Zentrierung des Verbindungsglieds gegenüber dem Kolben dient. Diese Ausführung bedeutet eine erhebliche Fertigungs- und Montagevereinfachung. Zusätzlich kann innerhalb der Anlagefläche ein Paßstift vorgesehen sein, welcher zusammen mit der Verbindungsschraube ein Verdrehen des Verbindungsglieds beim Einschrauben der Verbindungsschraube verhindert.

Es ist dabei ferner zweckmäßig, daß eine in der Pleuelstange geführte Schmierölbohrung an der pleuelseitigen Lagerstelle des Verbindungsglieds endet, wo eine in Axialrichtung verlaufende Schmiernut oder Abflachung der Oberfläche der Lagerstelle die Schmierölverteilung übernimmt.

Zusätzlich zur Schmierölverteilung in Axialrichtung kann außerdem eine längs einem Umfangsbogen geführte Schmierölnut vorgesehen sein, welche den Kolbenboden mit Spritzöl beaufschlagt. Der Spritzwinkel kann dabei durch Höher- und Tieferziehen der im Bereich der Lagerstelle axial verlaufenden Schulter des Pleuelauges verändert werden.

Im Folgenden wird die Erfindung anhand mehrerer Ausführungsformen erläutert. Es zeigt
- Fig. 1: einen durch die Schwenklagerachse des Pleuels geführten Kolbenquerschnitt,
- Fig. 2: einen durch die Kolbenachse des in Fig. 1 abgebildeten Kolbens senkrecht zur Schwenklagerachse des Pleuels geführten Schnitt gemäß II-II der Fig. 1,
- Fig. 3: ein Verbindungsglied gemäß den Fig. 1 und 2 in perspektivischer Darstellung,
- Fig. 4: eine Darstellung gemäß Fig. 1 mit Paßstiften zusätzlich zu den Verbindungsschrauben,
- Fig. 5: eine weitere Ausführungsform mit durch die Längsachse des Verbindungsglieds geführter Schnittebene,
- Fig. 6: einen Schnitt gemäß VII-VII der Fig. 6,
- Fig. 7: ein Verbindungsglied gemäß den Fig. 6 und 7 in perspektivischer Darstellung und
- Fig. 8: einen Ausschnitt A gemäß Fig. 7.

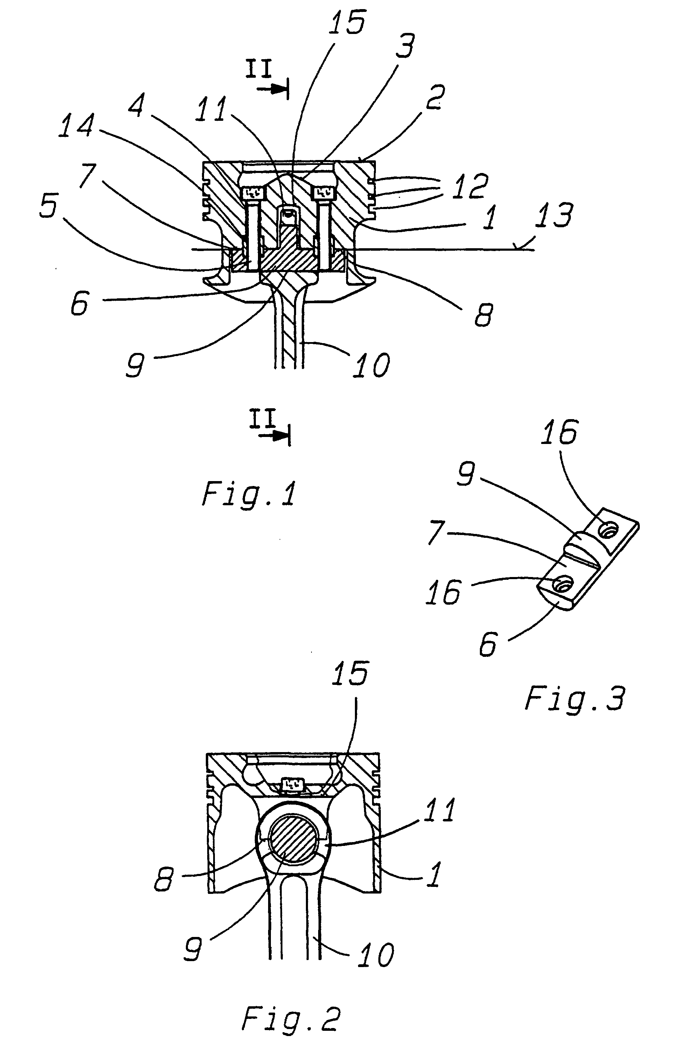

Fig. 1 zeigt einen zentrischen Querschnitt durch einen Kolben 1 eines Hubkolbenverbrennungsmotors. Der Kolbenboden 2 besitzt in seinem Zentrum eine Vertiefung 3, welche den Verbrennungsablauf begünstigt. Im Inneren der Vertiefung 3 befinden sich Bohrungen, in welchen Verbindungsschrauben 4 aufgenommen sind, deren Gewindeabschnitte 5 in Gewindebohrungen eines Verbindungsglieds 6 sitzen. Das Verbindungsglied 6 ist auf diese Weise an der vom Kolbenboden 2 abgewandten Innenseite des Kolbens 1 befestigt. Es stützt sich mit einer planen Anlagefläche 7 gegen eine entsprechende Gegenfläche 8 des Kolbens 1. Das Verbindungsglied 6 besitzt in seinem Mittelabschnitt eine Lagerstelle 9, um welche das Pleuel 10 mit dessen Lagerauge 11 schwenkbar gelagert ist.

Das Pleuelauge 11 und dementsprechend die Lagerstelle 9 sind in einem oberen Segmentbereich verhältnismäßig schmal ausgebildet, während der untere Segmentbereich demgegenüber verbreitert ist, so daß er nahezu den gesamten Abstand zwischen den beiden Verbindungsschrauben 4 überbrückt. Bei einem gemäß Fig. 3 ausgebildeten Verbindungsglied 6 kann das verbreiterte Pleuelsegment sich auch über die Schraubenlöcher hinaus erstrecken, so daß jede Biegebeanspruchung auf das Verbindungsglied ausgeschlossen ist. Diese Ausführungsform setzt selbstverständlich voraus, daß die Schraubenköpfe der Verbindungsschrauben im Kolbenboden sitzen, d.h. die Verbindungsschrauben in Richtung Kurbelwelle eingeschraubt sind. Im Umfangsbereich des Kolbens 1 sind die Nuten 12 zur Aufnahme der Kolbenringe eingezeichnet. Im Bereich der Trennebene 13 zwischen dem Verbindungsglied 6 und dem Kolben 1 sind die Verbindungsschrauben 4 durch Paßhülsen 14 abgestützt, welche dem Abtragen von Querkräften dienen. Um das obere Segment des Pleuelauges 11 herum besitzt der Kolben eine entsprechende Ausnehmung 15.

Fig. 2 zeigt einen Querschnitt durch die Schwenkachse des Pleuels 10. Dessen Pleuelauge 11 ist auf der Lagerstelle 9 des Verbindungsglieds 6 gelagert. Man erkennt die Gegenfläche 8 des Kolbens 1, gegen welche die seitlichen Anlageflächen 7 des Verbindungsglieds 6 entsprechend den durch die Verbindungsschrauben 4 ausgeübten Zugkräften anliegen.

Fig. 3 zeigt in perspektivischer Darstellung das Verbindungsglied 6 mit den seitlichen Anlageflächen 7 und der mittigen Lagerstelle 9, auf welcher das Pleuelauge gelagert ist. Im Bereich der seitlichen Anlageflächen sind Gewindebohrungen 16 angeordnet, in welche die Gewindeabschnitte 5 der Verbindungsschrauben 4 eingeschraubt sind.

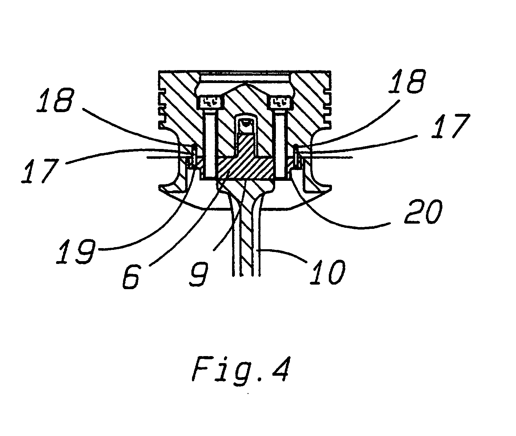

Fig. 4 unterscheidet sich gegenüber Fig. 1 dadurch, daß die Paßhülsen 14 ersetzt sind durch gesonderte zylindrische Paßstifte 17, welche in entsprechende Sacklochbohrungen 18 des Kolbens teilweise aufgenommen sind, teilweise in Bohrungen 19 des Verbindungsglieds 6 sitzen. Im Bereich dieser Bohrungen 19 sind die Enden des Verbindungsglieds 6 durch einen Absatz 20 entsprechend schmäler ausgebildet.

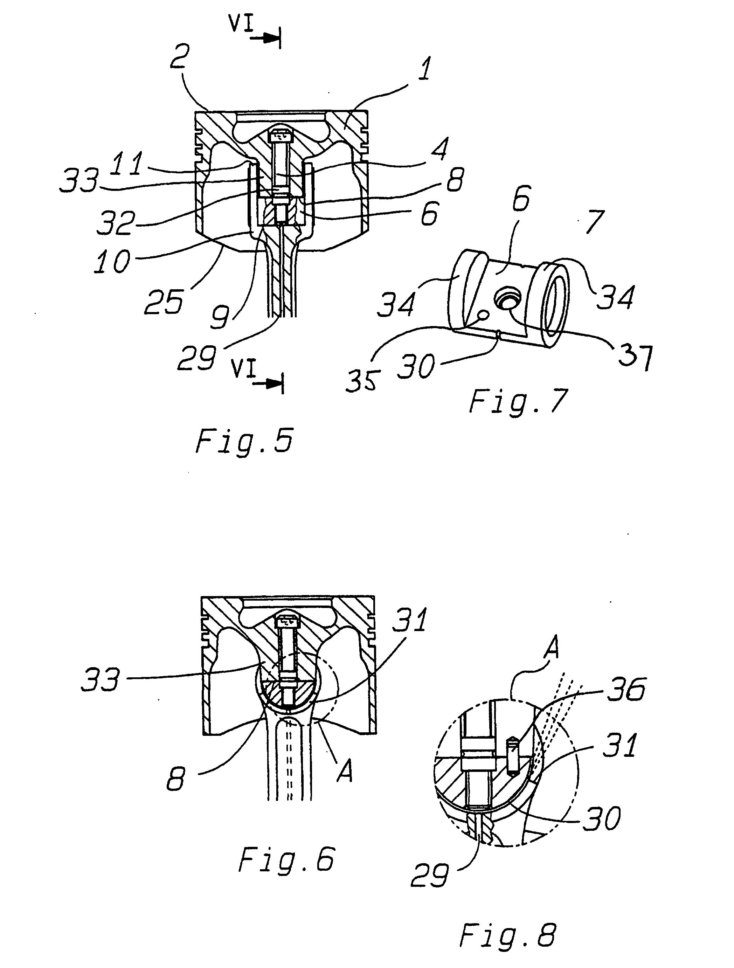

Bei der Ausführungsform gemäß den Fig. 5 bis 8 wird das Verbindungsglied 6 mit einer zentrisch im Kolben 1 angeordneten Verbindungsschraube 4 befestigt. Die Verbindungsschraube 4 ist als Paßschraube ausgebildet; deren Passungsansatz 32 zentriert Kolben 1 und Verbindungsglied 6. Das Verbindungsglied 6 ist an der Gegenfläche 8 eines aus der Unterseite des Kolbenbodens 2 herausragenden Ansatzstücks 33 befestigt. Das Verbindungsglied 6 besitzt eine pleuelseitige Lagerstelle 9, welche sich über die gesamte Breite des zugeordneten Pleuellagers erstreckt. Zwei seitliche Pleuelaugen 11 des Pleuels 10 sind auf entsprechend schmalen seitlichen Lagerstellen 34 des Verbindungsglieds 6 gelagert. Die schmalen seitlichen Pleuelaugen 11 haben die Aufgabe, das Verbindungsglied 6 im Pleuel 10 zentrisch zu führen und die Fliehkräfte aufgrund des Ansaugunterdrucks aufzunehmen. Wie in Fig. 7 gezeigt besitzt die Anlagefläche 7 des Verbindungsstücks 6 eine Bohrung 35 für einen Paßstift 36, der in Fig. 8 strichliert eingezeichnet ist und in eine entsprechende Zentrierbohrung in der Gegenfläche 8 des Ansatzstücks 33 eintritt. Wird die einzige Verbindungsschraube 4 in die Gewindebohrung 37 des Verbindungsglieds 6 eingedreht, so dient der Paßstift 36 der Verdrehsicherung, d. h. er gewährleistet eine präzise Positionierung des Verbindungsglieds 6 gegenüber dem Ansatzstück 33.

Das Pleuel 10 hat in seiner Längsachse einen zentrisch angeordneten Schmierölkanal 29. Dieser versorgt die Lagerstellen 9 mit Schmieröl. Eine Umfangsnut 30 des Verbindungsglieds 6 dient der Kolbenbodenkühlung, da ihre Enden wie Spritzdüsen wirken. Der Spritzwinkel kann dabei sehr leicht variiert werden, indem die Schulter 31 mehr oder weniger hoch ausgebildet ist (vgl. auch Fig. 8). Die geeignete Spritzölmenge ergibt sich aufgrund eines entsprechenden Querschnitts der Umfangsnut 30.

Durch das gabelartige Pleuelauge wirken die Kolbenkräfte direkt auf das Pleuel 10 ohne das Verbindungsglied 6 auf Biegung zu belasten.

## Patentansprüche

1. Vorrichtung zum schwenkbaren Verbinden von Kolben (1) und Pleuel (10) bei einem Hubkolbenmotor, mit einem Verbindungsglied (6), welches mit dem Kolben (1) auf seiner dem Brennraum abgwandten Seite verschraubt ist und eine Lagerstelle (9) für ein Pleuelauge (11) als kolbenseitiges Schwenklager des Pleuels (10) aufweist, wobei das Verbindungsglied (6) mindestens im Bereich der Verschraubung ebene Anlageflächen (7) aufweist, welche mit Gegenflächen (8) auf der Innenseite des Kolbens eine gemeinsame Trennebene (13) bilden, und wobei das Verbindungsglied (6) mittels einer oder mehrerer durch Bohrungen im Kolbenboden (2) hindurchgeführten Verbindungsschrauben (4) befestigt ist,
**dadurch gekennzeichnet,**
**daß** die Lagerstelle (9) zur Pleuelstange(10) hin deutlich breiter ist als auf ihrer dem Kolben (10) zugewandten Seite, daß der Kolben einteilig ausgebildet und das Verbindungsglied derart innerhalb des Kolbenhemds befestigt ist, daß Kolben und Verbindungsglied nach dem Lösen der Verbindungsschrauben durch die zylinderkopfseitige Zylinderöffnung ausgebaut werden können.

2. Vorrichtung nach Anspruch 1,
**dadurch gekennzeichnet,**
**daß** die Verbindungsschrauben (4) innerhalb einer Bodenmulde des Kolbenbodens (2) angeordnet sind.

3. Vorrichtung nach Anspruch 1,
**dadurch gekennzeichnet,**
**daß** zur Querkraftaufnahme im Bereich der Trennebene (13) diese überbrückende Zylinderstifte (17) oder die Verbindungsschrauben (4) umfassende Paßhülsen (14) vorgesehen sind oder die Verbindungsschrauben (4) als Paßschrauben ausgebildet sind.

4. Vorrichtung nach Anspruch 1,
**dadurch gekennzeichnet,**
**daß** das Verbindungsglied (6) zwei seitliche jeweils an die Trennebene (13) angrenzende Anlageflächen (7) aufweist, zwischen denen sich die kolbenseitige Lagerstelle (9) befindet.

5. Vorrichtung nach Anspruch 1,
**dadurch gekennzeichnet,**
**daß** das Verbindungsglied (6) eine mittige an die Trennebene (13) angrenzende Anlagefläche (7) aufweist, die sich zwischen zwei seitlichen kolbenseitigen Lagerstellen (9) befindet.

6. Vorrichtung nach Anspruch 5,
**dadurch gekennzeichnet,**
**daß** nur eine Verbindungsschraube (4) vorgesehen ist, die sich innerhalb der Anlagefläche (7) befindet und im Bereich der Trennebene (13) einen Passungsansatz (32) aufweist, welcher der Zentrierung des Verbindungsglieds (6) gegenüber dem Kolben (1) dient.

7. Vorrichtung nach Anspruch 1,
**dadurch gekennzeichnet,**
**daß** eine in der Pleuelstange (10) geführte Schmierölbohrung (29) an der pleuelseitigen Lagerstelle des Verbindungsglieds (6) endet, wo eine in Axialrichtung verlaufende Schmiernut oder Abflachung der Oberfläche der Lagerstelle die Schmierölverteilung übernimmt.

8. Vorrichtung nach Anspruch 7,
**dadurch gekennzeichnet,**
**daß** außerdem eine längs einem Umfangsbogen geführte Schmierölnut (30) vorgesehen ist, welche den Kolbenboden (2) mit Spritzöl beaufschlagt.

## Claims

1. A device for pivotally connecting a piston (1) and a connecting rod (10) in a reciprocating piston engine by means of a connecting element (6) bolted to the piston (1) on its side facing the combustion chamber and having a bearing point (9) for a connecting rod eye (11) as a piston-end swivel bearing for the connecting rod (10), whereby the connecting element (6) has flat supporting faces (7) at least in the area of the bolted connection, forming with the mating faces (8) a common separating plane (13) inside the piston, and whereby the connecting element (6) is attached by means of one or more connecting bolts (4) passing through holes in the piston head (2), **characterised in that** the bearing point (9) is distinctly wider towards the connecting rod (10) than on the side facing the piston (1), that the piston is made in one piece and the connecting element is fixed within the piston skirt in such a way that the piston and the connecting element can be removed through the cylinder aperture at the cylinder head end after detaching the connecting bolts.

2. A device according to Claim 1, **characterised in that** connecting bolts (4) are arranged within a depression in the piston head (2).

3. A device according to Claim 1, **characterised in that** precision fitting sleeves (14) are provided to take up traverse forces in the area of the separating plane (13) bridging over the said separating plane or surrounding the connecting bolts (4), or the connecting bolts (4) are designed as precision fitting bolts.

4. A device according to Claim 1, **characterised in that** the connecting element (6) has two side supporting faces (7), each adjacent to the separating plane (13), between which the bearing point (9) on the piston side is located.

5. A device according to Claim 1, **characterised in that** the connecting element (6) has a central supporting face (7) adjacent to the separating plane (13) located between two side bearing points (9) on the piston side.

6. A device according to Claim 5, **characterised in that** only one connecting bolt (4) is provided, located within the supporting face (7) and having a precision lug (32) which serves the purpose of centering the connecting element (6) against the piston (1).

7. A device according to Claim 1, **characterised in that** a lubricating oil hole (29) extending in the connecting rod (10) terminates at the bearing point of the connecting element (6) on the connecting rod side where a lubricating oil groove extending in the axial direction or a flat in the surface of the bearing point takes over oil distribution.

8. A device according to Claim 7, **characterised in that**, in addition, a lubricating oil groove (30) is provided, extending along a peripheral arch and supplying spray oil to the piston head (2).

## Revendications

1. Dispositif permettant la liaison pivotante d'un piston (1) et d'une bielle (10) dans un moteur à pistons alternatifs, comprenant un élément de raccordement (6) qui est vissé au piston (1) sur sa face orientée à l'opposé de la chambre de combustion et présente une butée (9) pour un oeil de pied de bielle (11) formant le palier de pivotement de la bielle (10) côté piston, l'élément de raccordement (6) présentant dans au moins la zone du raccord fileté des surfaces de contact planes (7) lesquelles donnent naissance à un plan de séparation commun (13) avec des surfaces conjuguées (8) ménagées sur la face intérieure du piston, et l'élément de raccordement (6) étant fixé au moyen d'une ou de plusieurs vis de raccordement (4) posées à travers des percements ménagés dans le fond (2) du piston,
**caractérisé en ce que**
la butée (9) est nettement plus large dans la direction du corps de bielle (10) que de son côté dirigé sur le piston (10), **en ce que** le piston est monobloc et **en ce que** l'élément de raccordement est fixé à l'intérieur de la jupe du piston de façon telle que le piston et l'élément de raccordement puissent être déposés par l'orifice du cylindre situé côté tête du piston après desserrage des vis de raccordement.

2. Dispositif suivant la revendication 1,
**caractérisé en ce que**
les vis de raccordement (4) sont mises en place à l'intérieur d'une cuvette du fond (2) du piston.

3. Dispositif suivant la revendication 1,
**caractérisé en ce que**
pour encaisser les efforts de cisaillement dans la zone du plan de séparation (13), on a prévu des goupilles cylindriques (17) traversant celui-ci ou des douilles de calibrage (14) dans lesquelles sont comprises les vis de raccordement (4), ou que les vis de raccordement (4) affectent la forme de vis de calibrage.

4. Dispositif suivant la revendication 1,
**caractérisé en ce que**
l'élément de raccordement (6) présente deux faces latérales de contact (7), respectivement voisines du plan de séparation (13), entre lesquelles se trouve la butée (9) située côté piston.

5. Dispositif suivant la revendication 1,
**caractérisé en ce que**
l'élément de raccordement (6) présente une face de contact centrale (7) voisine du plan de séparation (13), qui se trouve entre deux butées (9) latérales situées côté piston.

6. Dispositif suivant la revendication 5,
**caractérisé en ce que**
l'on n'a prévu qu'une vis de raccordement (4) comprise dans la surface de contact (7) et présentant un téton d'ajustage (32) qui sert au centrage de l'élément de raccordement (6) par rapport au piston (1).

7. Dispositif suivant la revendication 1,
**caractérisé en ce**
**qu'**un alésage d'huile de lubrification (29) traversant le corps de bielle (10) se termine au niveau de la butée de l'élément de raccordement (6) située côté bielle, où une rainure de lubrification d'orientation axiale ou un méplat de la surface de la butée se charge de la distribution l'huile de lubrification.

8. Dispositif suivant la revendication 7,
**caractérisé en ce que**
l'on a prévu en outre une rainure d'huile de lubrification (30) le long d'un arc périphérique, qui expose le fond (2) du piston à un jet d'huile projeté.
